# EUROPEAN PATENT SPECIFICATION

(11) **EP 0 856 154 B1**
(45) Date of publication and mention of the grant of the patent: **18.09.2002**
(21) Application number: 96934798.8
(22) Date of filing: 17.10.1996
(51) Int. Cl.: G01N 21/05, G01N 21/35

(54) **TRANSMISSION CELL FOR MEASURING NEAR INFRARED SPECTRA OF A HYDROCARBONACEOUS MATERIAL**
TRANSMISSIONSZELLE ZUR MESSUNG DER SPEKTREN IM NAHEN INFRAROT EINES KOHLENWASSERSTOFFHALTIGEN MATERIALS
CELLULE DE TRANSMISSION DESTINEE A MESURER LES SPECTRES DE L'INFRAROUGE PROCHE D'UN MATERIAU HYDROCARBONE

(30) Priority: 18.10.1995 EP 95307412; 11.03.1996 EP 96301646
(43) Date of publication of application: 05.08.1998
(73) Proprietor: SHELL INTERNATIONALE RESEARCH MAATSCHAPPIJ B.V., 2596 HR Den Haag (NL)
(72) Inventor: VAN DOORN, Ronald, NL-1031 CM Amsterdam (NL); HOOYMAN-SPAARGAREN, Froukje, Haasje, NL-1031 CM Amsterdam (NL); NEUGEBAUER, Ronald, Johan, NL-1031 CM Amsterdam (NL); SMEETS, Louis, Marie, NL-1031 CM Amsterdam (NL)
(74) Representative: Zeestraten, Albertus Wilhelmus Joannes
(86) International application number: EP9604605
(87) International publication number: WO97014951

(56) References cited:
- EP-A- 0 246 399
- EP-A- 0 304 232
- EP-A- 0 369 310
- WO-A-94/08226
- WO-A-94/09362
- US-A- 3 177 706

## Description

The present invention relates to a transmission cell suitable for use in a device for measuring (near) infrared spectra of a hydrocarbonaceous material, a spectrometer containing the cell and processes wherein use is made of such spectrometer.

The use of (near) infrared spectroscopy to control processes for the preparation of petroleum products is known for instance from "Hydrocarbon Processing", February 1995, pages 86-92. The processes described in said document include the preparation of gasolines and gas oils by the controlled blending of various components. The quality of the final product is determined on-line using a Fourier transform-type of spectrometer which is connected to a computer. In this way the use of blend tables can advantageously be avoided.

Another type of process widely applied in petroleum industry, in respect of which it would be highly advantageous to control continuously the product quality by means of (near) infrared spectroscopy, is the preparation of bitumen compositions by blending various streams of different grades of bitumen. Attempts to use (near) infrared spectroscopy for controlling the quality of bitumen compositions have, however, been rather disappointing so far, which can most likely be attributed to the very heavy components of which bituminous materials are built up.

In this respect reference is made to "Rapid Prediction and Evaluation of Bitumen Properties by Near Infrared Spectroscopy", G. Svechinsky and I. Ishia, which paper was presented at the Third Annual Meeting of RILEM Committee TC PBM-152, Madrid, Spain, June 1995. In said paper the use has been described, without any details, of the reflection of near infrared radiation for characterization and prediction of different bitumen parameters.

Object of the present invention is to provide a transmission cell suitable for use in a device for measuring (near) infrared spectra which spectra can be used for predicting physical properties of hydrocarbonaceous materials.

In accordance with the present invention a particular transmission cell is now provided which enables a very accurate prediction of physical properties of a wide range of hydrocarbonaceous materials.

Accordingly, the present invention relates to a transmission cell suitable for use in a device for measuring (near) infrared spectra of a hydrocarbonaceous material which comprises one or more sample compartments and one or more reference compartments, wherein the sample compartment(s) comprise(s) two transparant windows between which a space is formed for containing the hydrocarbonaceous material and inlet and outlet means for introducing and removing the hydrocarbonaceous material into and from the space between the windows and wherein the reference compartment(s) consists of one transparent window.

In the context of the present invention a transparant window is defined as a window which is transparant in the (near) infrared spectral region.

Although, the cell in accordance with the present invention may suitably contain one or more sample and reference compartments, it preferably contains one sample compartment and one reference compartment.

Preferably, the windows of the sample compartment are substantially parallel arranged in respect of each other.

The distance between the inner sides of the windows of the sample compartment depends on the type of hydrocarbonaceous material to be analysed. For instance when gasolines or other relatively light hydrocarbonaceous materials are analysed the distance between the inner sides of the windows may be well beyond 1 mm, whereas when analysing residual hydrocarbonaceous materials such as residual fuel oils and bituminous compositions the distance is normally less than 1.0 mm. Suitably, the distance between the inner sides of the windows of the sample compartment is in the range of from 0.2 to 1.0 mm, preferably in the range of from 0.4 to 0.8 mm, more preferably in the range of from 0.5 to 0.7 mm.

Suitably, the thickness of the windows of the sample compartment is in the range of from 2 to 10 mm, preferably in the range of from 3 to 5 mm.

The reference compartment suitably consists of one window having a thickness preferably in the range of from 4 to 20 mm, more preferably in the range of from 6 to 10 mm.

Suitably, the reference compartment(s) consists of one window which is transparent on all sides. Normally, such window consists of a block of transparent material.

Preferably, the total optical thickness of the sample compartment equals the thickness of the window of the reference compartment.

Suitably, the windows of the sample compartment(s) and the window of the reference compartment(s) consist of the same material. Suitable materials of which the windows of the sample compartment(s) and the reference compartment(s) can be made include calcium fluoride, sodium chloride, glass, sapphire, quartz or any other material known to be used for this purpose. Suitably, the windows of the sample compartment and the reference compartment have a substantially circular cross-section, which is preferably larger than the cross-section of the beam of (near) infrared light.

The space between the windows of the sample compartment for holding the hydrocarbonaceous material to be analysed is suitably formed by means of a spacer arranged between the windows. The spacer may be made of the same material as the windows. The spacer may be connected to the windows by means of an adhesive. In another embodiment the spacer made of the same material as the windows has been melted to both windows.

Suitably, the cell comprises one or more elements for heating the hydrocarbonaceous material.

The element(s) for heating the hydrocarbonaceous material may be of any the conventional types used for this type of purpose. Normally, the cell comprises two or more elements which are arranged in such a way that the sample compartment in operation has a constant elevated temperature enabling the hydrocarbonaceous material to flow through the space between the windows. Suitably, these elements comprise so-called hot fingers. The elements are suitable provided with means to which a power source can be connected.

Suitably, a device is attached to the cell to monitor its temperature.

The inlet and outlet means of the sample compartment enable the hydrocarbonaceous material to be analysed to flow through the space formed between the windows. Suitably, the inlet and outlet means debouch into the space formed between the windows. Suitably, the inlet and outlet means run both through one of the windows. Preferably, they are arranged substantially perpendicular to the surface of that window.

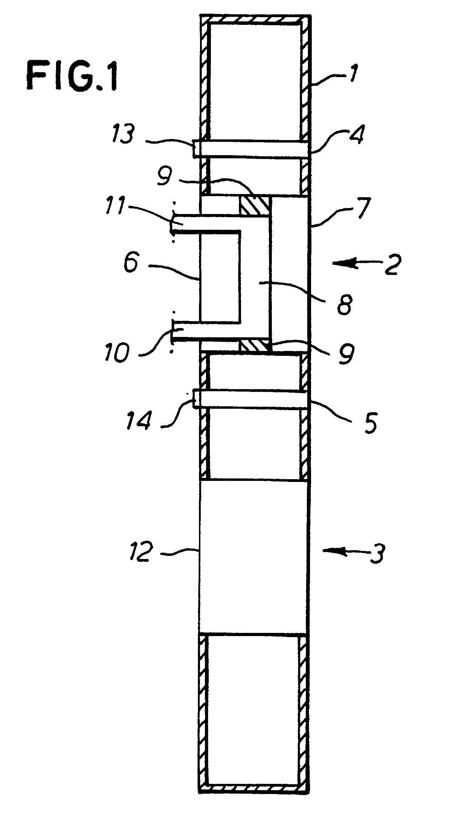

The invention will now be illustrated by way of Figure 1 which schematically shows a longitudinal section of a transmission cell in accordance with the present invention.

In Figure 1 a transmission cell is depicted comprising a side wall 1, a sample compartment 2, a reference compartment 3 and elements 4 and 5 for heating the hydrocarbonaceous material. The sample compartment comprises two transparant windows 6 and 7 between wich a space 8 is formed by means of spacer 9. Inlet means 10 and outlet means 11 for introducing and removing the hydrocarbonaceous material into and from the space 8 run through window 6. The reference compartment 3 comprises a transparant window 12. The elements 4 and 5 comprise means 13 and 14 to which a power source can be connected.

The transmission cell in accordance with the present invention is particularly attractive because of its simplicity.

The present transmission cell is especially useful for controlling the quality of a hydrocarbonaceous material obtained by blending various components.

The present invention also relates to a (near) infrared spectrometer using as a measuring cell any of the transmission cells described above.

Accordingly, the present invention further relates to a (near) infrared spectrometer comprising a (near) infrared source, a (near) infrared detector, and a transmission cell as defined hereinbefore.

The detector matches the type of wavelengths used, and comprises an active portion, for instance, indium arsenide.

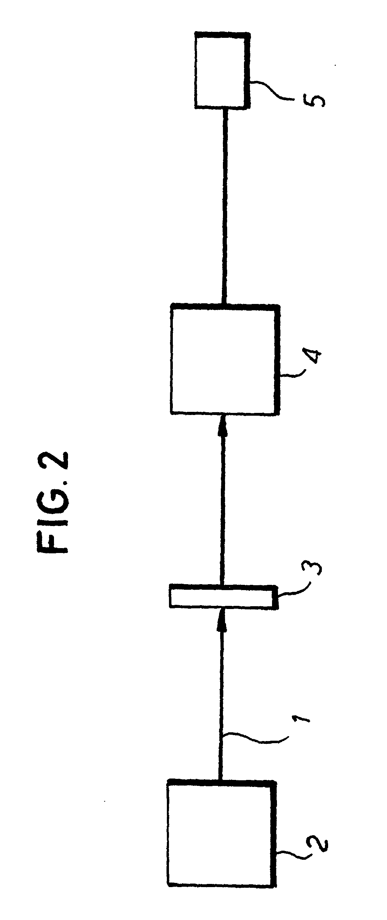

The detector transforms the transmitted beam of light into an electrical signal which is converted into digital data, processed and analysed by a computer which may result in an absorbance spectrum. The use of a numerical relation (e.g. a linear relation) enables the physical property of the hydrocarbonaceous material to be calculated from the absorbance spectrum. To this end the detector is connected to processing equipment for spectral analysis and for correlating spectral data to the physical property of the hydrocarbonaceous material. The spectrometer gives the measurements for the (near) infrared spectral region selected, and is linked to the processing equipment which permits numerical treatment of the data using a computer. In operation, as schematically shown in Figure 2, a beam of light 1 originating from a (near) infrared source 2 is transmitted through transmission cell 3 and collected in the (near) infrared detector 4 which is connected to processing equipment 5.

Suitably, the (near) infrared spectral region has wavelengths which range of from 1000 to 10,000 nm. The infrared spectral region to be used depends on the hydrocarbonaceous material to be analysed, as will be appreciated by the skilled person. For instance, if residual hydrocarbonaceous materials such as crude oil residues are to be analysed the wavelengths preferably range of from 1500 to 3000 nm, more preferably of from 1640 to 2630 nm or one or more selected intervals thereof, whereas if relatively light hydrocarbonaceous materials are to be analysed such as gasolines, the wavelengths suitably range of from 1000 to 3000 nm, preferably of from 1000 to 2630 nm, or a selected interval thereof.

Preferably, the cell is connected to a moving device for enabling the beam of light to be transmitted by turn through the sample compartment or the reference compartment. Suitably, the moving device is connected to the cell in such a way that the cell is moved perpendicular to the beam of light. Suitably, the centres of the windows of the sample compartment and the reference compartment lie on the same vertical or horizontal axis depending on the direction of movement of the cell.

The spectrometer according to the present invention may comprise optical fibres and condensors arranged upstream and downstream the transmission cell. In this way on-line measurements can be carried out in a blending unit without needing the immediate vicinity of the spectrometer. For instance, in a suitable embodiment a first optical fibre is connected with a first end to the near infrared source, a first condensor can be arranged between a second end of the first optical fibre and the cell, and a second condensor is arranged between a first end of a second optical fibre of which a second end is connected to the detector, wherein the condensors are substantially symmetrically arranged with respect to the cell.

The present invention further relates to a method for predicting a physical property of a hydrocarbonaceous material using the spectrometer described above in which the detector is connected to the processing equipment, wherein a beam of light having wavelengths in the range of from 1000 to 10,000 nm is transmitted through the sample compartment and/or the reference compartment, whereby the hydrocarbonaceous material to be analysed has a temperature in the range from 25 to 250 °C, the beam of light which passes through the compartment(s) is collected in the detector in which it is transformed into an electrical signal which is passed to the processing equipment.

As indicated above physical properties of hydrocarbonaceous materials can in accordance with the present invention be predicted from their (near) infrared spectra, enabling for instance a continuous quality control of a hydrocarbonaceous feedstock and/or the product derived therefrom. The present invention also relates to the use of the present spectrometer in process control, process steering and hydrocarbonaceous feedstock and hydrocarbonaceous product quality monitoring.

The hydrocarbonaceous materials which can be analysed using the present transmission cell comprise crude oils and products derived therefrom including relatively light hydrocarbonaceous materials such as gasolines, gasoils and kerosines, and heavy hydrocarbonaceous materials such as heavy gas oils and crude oil residues, residual fuel oils and bituminous materials.

Crude oil residues may consist of straight run residues such as long (atmospheric) and short (vacuum) residues, processed residue streams such as thermally cracked, hydrocracked or catalytically cracked residues. Residual fuel oils may consist of residues and any known diluent streams such as any refinery stream to influence residue properties, and may contain any known additive such as stabilising or emulsifying agents.

Suitable bituminous materials include naturally occurring bitumens or derived from a mineral oil. Also blends of various bituminous materials can be analysed. Examples of suitable bituminous materials include distillation or "straight-run bitumens", cracked residues, polymer-modified bitumens, precipitation bitumens, e.g. propane bitumens, blown bitumens, e.g. catalytically blown bitumen and mixtures thereof.

Other suitable bituminous materials include mixtures of one or more of these bitumens with extenders (fluxes) such as petroleum extracts, e.g. aromatic extracts, distillates or residues, or with oils. The bituminous materials to be analysed may contain any emulsifying agent known in the art.

The above-mentioned heavy hydrocarbonaceous materials to be analysed have suitably a temperature of at least 50°C. Crude oil residues and bituminous materials to be analysed have preferably a temperature of at least 100°C.

The method for predicting the physical properties involves the following steps of:
a) selecting a set of hydrocarbonaceous materials of different quality;
b) determining a physical property of the hydrocarbonaceous materials by conventional measurement;
c) measuring the (near) infrared spectra of the selected set of hydrocarbonaceous materials, whereby use is made of the present transmission cell;
d) selecting in the spectral region a range of wavelengths, and using the absorbance values measured at these wavelengths as an input for multivariate statistical analysis or a neural network;
e) correlating the absorbance values obtained with the physical property as determined under b) by means of multivariate statistical analysis or a neural network and generating a predictive model; and subsequently
f) applying this predictive model to (near) infrared spectra, taken under the same conditions, for a hydrocarbonaceous material of an unknown physical property, thus providing the physical property of the unknown hydrocarbonaceous material.

Thus, the present invention also provides a method for predicting a physical property of a hydrocarbonaceous material comprising the steps of a) - f) as described hereinabove.

According to the invention the (near) infrared spectra of a set of hydrocarbonaceous materials (suitably at least 10, preferably at least 50) of different quality are measured. The number of hydrocarbonaceous materials of different quality in the set is important since this determines the generality and applicability of any subsequent statistical predictive pool.

The spectra obtained can be analysed, together with determinations of the physical property by conventional measurements, using multivariate statistical techniques known as such, e.g. Partial Least Squares, Multiple Linear Regression, Reduced Rank Regression, Principal Component Analysis and the like, or neural networks.

Suitably, the absorbance values are measured at a large number of the wavelengths in the spectral region. Suitably, the absorbance values are measured at the whole range of wavelengths in the spectral region or at one or more selected intervals thereof. When heavy hydrocarbonaceous materials are analysed, preferably, the absorbance values are measured at the whole range of wavelengths in the spectral region.

Subsequently a predictive model is generated that can be applied to the (near) infrared spectra, taken under the same conditions, for bituminous materials of an unknown physical property.

Correlation of the absorbance values with the physical property of the hydrocarbonaceous materials as determined under b) is done by known techniques mentioned before such as multiple linear regression or partial least squares regression.

The physical properties to be determined of residual hydrocarbonaceous materials include density viscosity, flash point, storage and handling stability, compatibility and chemical composition related properties such as aromaticity, C7 asphaltenes content, wax content, paraffin content, microcarbon residue, Conradson carbon residue, engine performance parameters and feedstock assessment parameters. The physical properties to be determined of bituminous hydrocarbonaceous materials include properties such as penetration (PEN), softening point, density, volatility, and retained PEN (after RTFOT (Rolling thin film oven test)) in respect of gasolines the physical properties include for instance octane number. If a gas oil is to be analysed the physical properties include for instance cloud point, pour point and cetane number.

The time required for determining the physical properties of the hydrocarbonaceous materials is very short, normally less than one minute. Thus, the present process constitutes a considerable improvement over the conventional methods which include taking a sample of the material to be analysed and determining its various physical properties by means of separate rather lengthy measurements. In accordance with the present invention two or more physical properties of a hydrocarbonaceous material can be determined simultaneously. For instance of a bituminous material the softening point and PEN can be determined simultaneously.

The present cell can be used in on-line or off-line mode of operation. If the present cell is used on-line whereby the inlet means of the sample compartment is connected to a source supplying the hydrocarbonaceous material, said material flows through the sample compartment.

A reference spectrum is periodically measured by transmitting the beam of light originating from the (near) infrared source through the reference compartment and to the detector, in order to determine the absorbance of the hydrocarbonaceous material. To this end the transmission cell can be connected to the moving means described hereinabove. The absorbance of the hydrocarbonaceous material which can be defined with the Beer-Lambert law (-log I/Io) wherein Io is the intensity of the light transmitted by the reference compartment and I is the intensity of the light transmitted by the sample compartment.

The present invention also relates to a process for preparing a hydrocarbon composition comprising blending two or more streams of different grades of hydrocarbonaceous materials and determining a physical property of the hydrocarbon composition so obtained by means of the predicting method according to the present invention. In this way, for instance, residual fuel oils or bitumen compositions of controlled quality can be prepared. For instance by blending a hard bitumen, a soft bitumen and a (catalytically) blown bitumen.

In operation the blending unit will be computer controlled by a feed-back control system for adjusting the blending components or conditions when needed to obtain a hydrocarbon composition having desired properties.

## Claims

1. A transmission cell suitable for use in a device for measuring near-infrared spectra of a hydrocarbonaceous material which comprises one or more sample compartments (2) and one or more reference compartments (3), wherein the sample compartment(s) comprise(s) two transparent windows (6,7) between which a space (8) is formed for containing the hydrocarbonaceous material and inlet and outlet means (10,11) for introducing and removing the hydrocarbonaceous material into and from the space between the windows and wherein the reference compartment(s) (3) consists of one transparent window (12).

2. A transmission cell according to claim 1 comprising one sample compartment (2) and one reference compartment (3).

3. A transmission cell according to claim 1 or 2, wherein the windows (6,7) of the sample compartment (2) are substantially parallel arranged in respect of each other.

4. A transmission cell according to any one of claims 1 to 3, wherein the distance between the inner sides of the windows (6,7) of the sample compartments (2) is in the range from 0.2 to 1.0 mm.

5. A transmission cell according to claim 4, wherein the distance is in the range from 0.4 to 0.8 mm.

6. A transmission cell according to any one of claims 1 to 5, wherein the thickness of the windows of the sample compartment is in the range of from 2 to 10 mm.

7. A transmission cell according to any one of claims 1-6, wherein the thickness of the window of the reference compartment is in the range of from 4 to 20 mm.

8. A transmission cell according to any one of claims 1 to 7, wherein the windows of the sample compartment and the window of the reference compartment consist of the same material.

9. A transmission cell according to any one of claims 1 to 8, wherein the windows consist of calcium fluoride, sodium chloride, glass, sapphire or quartz.

10. A transmission cell according to any one of claims 1 to 9 which comprises one or more elements for heating the hydrocarbonaceous material.

11. A near-infrared spectrometer comprising a near-infrared source, a near-infrared detector (4), and a transmission cell as defined in any one of claims 1 to 10.

12. A spectrometer according to claim 11, wherein the cell is connected to a moving device for enabling a beam of light originating from the near-infrared source to be transmitted by turn through the sample compartment (2) or the reference compartment (3).

13. A spectrometer according to claim 11 or 12, wherein the detector is connected to processing equipment (5) for spectral analysis and for correlating spectral data to the physical property of the hydrocarbonaceous material.

14. A method for predicting a physical property of a hydrocarbonaceous material using the spectrometer according to claim 13, wherein a beam of light having a wavelength in the range of from 1000 to 10,000 nm is transmitted through the sample compartment and/or the reference compartment, whereby the hydrocarbonaceous material to be analysed has a temperature in the range from 25 to 250 °C, the beam of light which passes through the compartment(s) is collected in the detector in which it is transformed into an electrical signal which is passed to the processing equipment.

15. A method according to claim 14, wherein the hydrocarbonaceous material is a heavy hydrocarbonaceous material having a temperature of above 50 °C.

16. A method for predicting a physical property of a hydrocarbonaceous material by means of a transmission cell according to any one of claims 1 to 10, comprising the steps of:
a) selecting a set of hydrocarbonaceous materials of different quality;
b) determining a physical property of the hydrocarbonaceous materials by conventional measurement;
c) measuring the (near) infrared spectra of the selected set of hydrocarbonaceous materials, whereby use is made of said transmission cell;
d) selecting in the spectral region a range of wavelengths, and using the absorbance values measured at these wavelengths as an input for multivariate statistical analysis or a neural network;
e) correlating the absorbance values obtained with the physical property as determined under b) by means of multivariate statistical analysis or a neural network and generating a predictive model; and subsequently
f) applying this predictive model to (near) infrared spectra, taken under the same conditions, for a hydrocarbonaceous material of an unknown physical property, thus providing the physical property of the unknown hydrocarbonaceous material.

17. A process for preparing a bitumen composition comprising blending two or more streams of different grades of bitumen and determining a property of the bitumen composition so obtained by means of a method as described in claim 15.

18. Use of the spectrometer according to claim 13 in process control, process steering, and hydrocarbonaceous feedstock and hydrocarbonaceous product quality monitoring.

## Patentansprüche

1. Transmissionszelle, die zur Verwendung in einer Vorrichtung zur Messung (naher) Infrarotspektren eines kohlenwasserstoffhaltigen Materials geeignet ist, welche eines oder mehrere Probenabteile (2) und eines oder mehrere Referenzabteile (3) aufweist, wobei das bzw. die Probenabteil(e) zwei transparente Fenster (6, 7) haben, zwischen denen ein Raum (8) zur Aufnahme des kohlenwasserstoffhaltigen Materials gebildet ist, und Einlaß- und Auslaßmittel (10, 11) zum Einbringen und Entfernen des kohlenwasserstoffhaltigen Materials in den und aus dem Raum zwischen den Fenstern, wobei das bzw. die Referenzabteil(e) (3) aus einem transparenten Fenster (12) besteht bzw. bestehen.

2. Transmissionszelle nach Anspruch 1, die ein Probenabteil (2) und ein Referenzabteil (3) aufweist.

3. Transmissionszelle nach Anspruch 1 oder 2, bei welcher die Fenster (6, 7) des Probenabteils (2) im wesentlichen parallel zueinander angeordnet sind.

4. Transmissionszelle nach einem der Ansprüche 1 bis 3, bei welcher das Abstand zwischen den Innenseiten der Fenster (6, 7) des Probenabteils (2) im Bereich von 0,2 bis 1,0 mm liegt.

5. Transmissionszelle nach Anspruch 4, bei welcher der Abstand im Bereich von 0,4 bis 0,8 mm liegt.

6. Transmissionszelle nach einem der Ansprüche 1 bis 5, bei welcher die Dicke der Fenster des Probenabteils im Bereich von 2 bis 10 mm liegt.

7. Transmissionszelle nach einem der Ansprüche 1 bis 6, bei welcher die Dicke des Fensters des Bezugsabteils im Bereich von 4 bis 20 mm liegt.

8. Transmissionszelle nach einem der Ansprüche 1 bis 7, bei welcher die Fenster des Probenabteils und das Fenster des Bezugsabteils aus dem gleichen Material bestehen.

9. Transmissionszelle nach einem der Ansprüche 1 bis 8, bei welcher die Fenster aus Kalziumflourid, Natriumchlorid, Glas, Saphir oder Quarz bestehen.

10. Transmissionszelle nach einem der Ansprüche 1 bis 9, welche eines oder mehrere Elemente zum Erhitzen des kohlenwasserstoffhaltigen Materials enthält.

11. Ein nahes-Infrarot-Spektrometer mit einer nahen-Infrarotquelle, einem nahen-Infrarotdetektor (4) und einer Transmissionszelle, wie sie in einem der Ansprüche 1 bis 10 definiert ist.

12. Spektrometer nach Anspruch 11, bei welchem die Zelle mit einer bewegten Vorrichtung verbunden ist, damit ein Lichtstrahl, der aus der nahen Infrarotquelle stammt, durch das Probenabteil (2) oder das Referenzabteil (3) durchgelassen wird.

13. Spektrometer nach Anspruch 11 oder 12, bei welchem der Detektor mit einer Verarbeitungseinrichtung (5) für die Spektralanalyse und zum Korrelieren der Spektraldaten mit der physikalischen Eigenschaft des kohlenwasserstoffhaltigen Materials verbunden ist.

14. Verfahren zum Vorhersagen einer physikalischen Eigenschaft eines kohlenwasserstoffhaltigen Materials unter Verwendung des Spektrometers nach Anspruch 13, bei welchem ein Lichtstrahl mit einer Wellenlänge im Bereich von 1000 bis 10000 nm durch das Probenabteil und/oder das Referenzabteil durchgelassen wird, wobei das zu analysierende kohlenwasserstoffhaltige Material eine Temperatur im Bereich von 25 bis 250 °C hat, und der durch das bzw. die Abteile hindurchgehende Lichtstrahl im Detektor gesammelt wird, in welchem er in ein elektrisches Signal umgewandelt wird, welches der Verarbeitungseinrichtung zugeleitet wird.

15. Verfahren nach Anspruch 14, bei welchem das kohlenwasserstoffhaltige Material ein schweres kohlenwasserstoffhaltiges Material mit einer Temperatur oberhalb 50 °C ist.

16. Verfahren zum Vorhersagen einer physikalischen Eigenschaft eines kohlenwasserstoffhaltigen Materials mittels einer Transmissionszelle nach einem der Ansprüche 1 bis 10, mit den Schritten:
a) Auswählen eines Satzes von kohlenwasserstoffhaltigen Materialien unterschiedlicher Qualität;
b) Bestimmen einer physikalischen Eigenschaft der kohlenwasserstoffhaltigen Materialien durch konventionelle Messung;
c) Messen der (nahen) Infrarotspektren des ausgewählten Satzes von kohlenwasserstoffhaltigen Materialien, wobei die Transmissionszelle angewendet wird;
d) Auswählen eines Bereiches von Wellenlängen in dem Spektralbereich und Verwendung der bei diesen Wellenlängen gemessenen Absorptionswerte als Eingang für die multivariante statistische Analyse oder ein neurales Netzwerk;
e) Korellieren der Absorptionswerte, die mit der physikalischen Eigenschaft unter b) ermittelt worden sind, mittels multivarianter statistischer Analyse oder eines neuralen Netzwerkes und Erzeugen eines Vorhersagemodells; und nachfolgend
f) Anwenden dieses Vorhersagemodells auf (nahe) Infrarotspektren, die unter den gleichen Bedingungen erhalten wurden, für ein kohlenwasserstoffhaltiges Material einer unbekannten physikalischen Eigenschaft, womit die physikalische Eigenschaft des unbekannten kohlenwasserstoffhaltigen Materials ermittelt wird.

17. Verfahren zum Aufbereiten einer Bitumenzusammensetzung, bei welchem zwei oder mehr Ströme unterschiedlicher Bitumenqualitäten gemischt werden und eine Eigenschaft der Bitumenzusammensetzung mittels eines Verfahrens nach Anspruch 15 bestimmt wird.

18. Verwendung des Spektrometers nach Anspruch 13 zur Prozeßkontrolle, Prozeßsteuerung und zum Überwachen des kohlenwasserstoffhaltigen Ausgangsmaterials und der Qualität des kohlenwasserstoffhaltigen Produktes.

## Revendications

1. Cellule de transmission destinée à être utilisée dans un dispositif pour mesurer des spectres infrarouges proches d'une matière hydrocarbonée, qui comprend un ou plusieurs compartiments à échantillon (2) et un ou plusieurs compartiments de référence (3), dans laquelle le ou les compartiments à échantillon comprend/comprennent deux fenêtres transparentes (6, 7) entre lesquelles un espace (8) est formé pour contenir la matière hydrocarbonée et des moyens d'entrée et de sortie (10, 11) pour introduire et enlever la matière hydrocarbonée dans et de l'espace entre les fenêtres et dans laquelle le ou les compartiments de référence (3) consistent en une fenêtre transparente (12).

2. Cellule de transmission suivant la revendication 1, comprenant un compartiment à échantillon (2) et un compartiment de référence (3).

3. Cellule de transmission suivant l'une ou l'autre des revendications 1 et 2, dans laquelle les fenêtres (6, 7) du compartiment à échantillon (2) sont agencées sensiblement parallèlement l'une par rapport à l'autre.

4. Cellule de transmission suivant l'une quelconque des revendications 1 à 3, dans laquelle la distance entre les faces intérieures des fenêtres (6, 7) des compartiments à échantillon (2) se situe dans la plage de 0,2 à 1,0 mm.

5. Cellule de transmission suivant la revendication 4, dans laquelle la distance se situe dans la plage de 0,4 à 0,8 mm.

6. Cellule de transmission suivant l'une quelconque des revendications 1 à 5, dans laquelle l'épaisseur des fenêtres du compartiment à échantillon se situe dans la plage de 2 à 10 mm.

7. Cellule de transmission suivant l'une quelconque des revendications 1 à 6, dans laquelle l'épaisseur de la fenêtre du compartiment de référence se situe dans la plage de 4 à 20 mm.

8. Cellule de transmission suivant l'une quelconque des revendications 1 à 7, dans laquelle les fenêtres du compartiment à échantillon et la fenêtre du compartiment de référence sont constituées de la même matière.

9. Cellule de transmission suivant l'une quelconque des revendications 1 à 8, dans laquelle les fenêtres sont constituées de fluorure de calcium, chlorure de sodium, verre, saphir ou quartz.

10. Cellule de transmission suivant l'une quelconque des revendications 1 à 9, qui comprend un ou plusieurs éléments pour chauffer la matière hydrocarbonée.

11. Spectromètre à infrarouge comprenant une source d'infrarouge proche, un détecteur d'infrarouge proche (4) et une cellule de transmission telle que définie dans l'une quelconque des revendications 1 à 10.

12. Spectromètre suivant la revendication 11, dans lequel la cellule est connectée à un dispositif mobile pour permettre la transmission d'un rayon de lumière provenant de la source d'infrarouge proche successivement à travers le compartiment à échantillon (2) ou le compartiment de référence (3).

13. Spectromètre suivant l'une ou l'autre des revendications 11 et 12, dans lequel le détecteur est connecté à un équipement de traitement (5) pour une analyse spectrale et pour la mise en corrélation de données spectrales avec la propriété physique de la matière hydrocarbonée.

14. Procédé pour prédire une propriété physique d'une matière hydrocarbonée utilisant le spectromètre suivant la revendication 13, dans lequel un rayon de lumière ayant une longueur d'onde allant de 1.000 à 10.000 nm est transmis à travers le compartiment à échantillon et/ou le compartiment de référence, la matière hydrocarbonée à analyser ayant une température allant de 25 à 250°C, le rayon de lumière qui traverse le ou les compartiments étant recueilli dans le détecteur dans lequel il est transformé en un signal électrique qui est envoyé à l'équipement de traitement.

15. Procédé suivant la revendication 14, dans lequel la matière hydrocarbonée est une matière hydrocarbonée lourde ayant une température au-dessus de 50°C.

16. Procédé pour prédire une propriété physique d'une matière hydrocarbonée au moyen d'une cellule de transmission suivant l'une quelconque des revendications 1 à 10, comprenant les étapes suivantes :
a) la sélection d'une série de matières hydrocarbonées de qualité différente;
b) la détermination d'une propriété physique des matières hydrocarbonées par une mesure conventionnelle;
c) la mesure des spectres infrarouges (proches) de la série sélectionnée de matières hydrocarbonées, pour laquelle on utilise ladite cellule de transmission;
d) la sélection dans la région spectrale d'une gamme de longueurs d'onde, et l'utilisation des valeurs d'absorption mesurées à ces longueurs d'onde comme entrée pour une analyse statistique multivariée ou un réseau neutre;
e) la mise en corrélation des valeurs d'absorption obtenues avec la propriété physique telle que déterminée sous b) au moyen d'une analyse statistique multivarée ou d'un réseau neutre et la génération d'un modèle de prédiction; et ensuite
f) l'application de ce modèle de prédiction à des spectres infrarouges (proches), pris sous les mêmes conditions, pour une matière hydrocarbonée d'une propriété physique inconnue, en obtenant ainsi la propriété physique de la matière hydrocarbonée inconnue.

17. Procédé de préparation d'une composition de bitume comprenant le mélange de deux courants ou plus de qualités différentes de bitume et la détermination d'une propriété de la composition de bitume ainsi obtenue au moyen d'un procédé tel que décrit dans la revendication 15.

18. Utilisation du spectromètre suivant la revendication 13, dans la régulation d'un procédé, l'orientation d'un procédé et le contrôle de la qualité d'une charge d'alimentation hydrocarbonée et d'un produit hydrocarboné.
